# EUROPÄISCHE PATENTANMELDUNG

(11) **EP 1 262 731 A1**
(43) Veröffentlichungstag der Anmeldung: **04.12.2002**
(21) Anmeldenummer: 01113048.1
(22) Anmeldetag: 29.05.2001
(51) Int. Cl.: G01B 5/28

(54) **Messtastereinrichtung**

(71) Anmelder: ROBERT BOSCH GMBH, 70442 Stuttgart (DE)
(72) Erfinder: Regitz, Thilo, 66459 Kirkel (DE)

(57) **Zusammenfassung**

Die Erfindung bezieht sich auf eine Messtastereinrichtung (1) mit einem in einer Axialführung (1.1) gelagerten und in x-Richtung unter Messung des Weges vor und zurück verfahrbaren Tasterarm (1.4) und einem an dessen freiem Endbereich angebrachten Tasterkopf (1.2), der während einer Messung sich mit einer Bauteiloberfläche in Berührung befindet und während des Verfahrens in x-Richtung durch die Oberflächenkonturen in einer zur x-Richtung senkrechten z-Richtung ausgelenkt wird, und mit einer Auswerteeinrichtung, mit der die Auslenkungen in z-Richtung in Abhängigkeit von dem Weg in x-Richtung erfassbar und auswertbar sind. Ein einfach zu handhabender, kompakter Aufbau wird dadurch erzielt, dass der an sich starre Tasterarm (1.4) in seinem vorderen Abschnitt mit einem Tasterschenkel (1.3) versehen ist, der eine gelenkige Anbindung des Tasterkopfes (1.2) an den Tasterarm (1.4) bildet, wobei an dem Tasterschenkel (1.3) ein die Auslenkung in z-Richtung aufnehmendes Messelement (1 .5, 1.11) angeordnet ist (Fig. 1A).

## Beschreibung

### Stand der Technik

Die Erfindung bezieht sich auf eine Messtastereinrichtung mit einem in einer Axialführung gelagerten und in x-Richtung unter Messung des Weges vor und zurück verfahrbaren Tasterarm und einem an dessen freiem Endbereich angebrachten Tasterkopf, der während einer Messung sich mit einer Bauteiloberfläche in Berührung befindet und während des Verfahrens in x-Richtung durch die Oberflächenkonturen in einer zur x-Richtung senkrechten z-Richtung ausgelenkt wird, und mit einer Auswerteeinrichtung, mit der die Auslenkungen in z-Richtung in Abhängigkeit von dem Weg in x-Richtung erfassbar und auswertbar sind.

Eine Messtastereinrichtung dieser Art, wie sie beispielsweise in dem DE-Katalog der Firma Taylor Hobson, 7/97, Seiten 2, 3 angegeben ist, dient zum Messen von Oberflächenstrukturen, wie z.B. kleiner Radien oder Rauhigkeiten von Metallwerkstoffen in der Größenordnung einiger Mikrometer. Ein die Oberfläche taktil abtastender und dabei in z-Richtung entsprechend der Oberflächenkontur ausgelenkter Tasterkopf mit einer geeigneten (z.B. spitzen oder gerundeten) Tastspitze ist an einem in axialer Richtung (x-Richtung) vor und zurück bewegbaren, starren Tasterarm angebracht, der geräteseitig im Bereich der Axialführung um eine Achse schwenkbar gelagert ist. Die Schwenkbewegungen werden zum Auswerten der abgetasteten Oberflächenkontur in Abhängigkeit von dem Weg in x-Richtung in elektrische Signale umgewandelt und elektronisch ausgewertet. Schwierigkeiten können sich bei einer derartigen Abtastmessung dann ergeben, wenn die abzutastende Oberfläche im Inneren eines engen Kanals des Bauteils liegt, der zudem seitlich nicht einsehbar ist. Aus diesem Grunde werden derartige Messtastereinrichtungen für die Messung an offenen sichtbaren Oberflächen eingesetzt; zum Freilegen einer inneren Oberfläche wird das Bauteil zerschnitten und damit zerstört.

Für ein zerstörungsfreies Messen von inneren Oberflächenstrukturen, etwa Radien an zwei quer zueinander verlaufenden Bohrungen, wird z.B. ein elastomeres Abdruckverfahren angewendet.

Der Erfindung liegt die Aufgabe zugrunde, eine Messtastereinrichtung der eingangs genannten Art bereit zu stellen, mit der insbesondere auch in engen Bohrungen eines Bauteils mit wenig Aufwand Oberflächenstrukturen messbar sind.

Diese Aufgabe wird mit den Merkmalen des Anspruches 1 gelöst. Hiernach ist vorgesehen, dass der an sich starre Tasterarm in seinem vorderen Abschnitt mit einem Tasterschenkel versehen ist, der eine gelenkige Anbindung des Tasterkopfes an den Tasterarm bildet, wobei an dem Tasterschenkel ein die Auslenkung in z-Richtung aufnehmendes Messelement angeordnet ist.

Da der an sich starre, und in der Axialführung starr gehaltene Tasterarm in z-Richtung nicht über seine gesamte Länge bewegt wird, sondern nur der daran angebrachte, verhältnismäßig kurze Tasterschenkel, lässt sich der Tasterarm mit dem Tasterschenkel auch tief in enge Kanäle eines Bauteils einführen, um darin Oberflächenabtastungen vorzunehmen. Beispielsweise können auf diese Weise auch Rundungen im Bereich von einander quer verlaufenden Bohrungen mit Rundungsradien im Bereich einiger Mikrometer ohne Schwierigkeiten abgetastet werden. Hierbei wird auch die Gefahr eines Verhakens des Tasterkopfes an der Oberfläche erheblich vermindert, da nicht der lange, starre Tasterarm ausgelenkt wird.

Ist vorgesehen, dass der Tasterschenkel fest an dem Tasterarm angebracht und biegeelastisch ausgebildet ist, wobei der Ausdruck "fest" angibt, dass der Tasterschenkel ein Festgelenk bildet (im Gegensatz zu einem Spielgelenk), so werden auch Abtastungen im Bereich von unter 1µm noch abtastbar und die Gefahr eines Verhakens weiter wesentlich verringert. Der Tasterschenkel kann dabei auch austauschbar an dem Tasterarm angebracht sein, um z.B. unterschiedliche Tasterköpfe einsetzen zu können.

Verschiedene Messaufnehmer für die Ablenkung in z-Richtung werden dadurch erhalten, dass das Messelement eine Dehnmessstreifeneinheit, ein optisches Ablenkelement oder ein piezoelektrischer, induktiver oder kapazitiver Geber ist.

Dabei ist es beispielsweise zur Kompensation von Temperaturfehlern günstig, wenn die Dehnmessstreifeneinheit zwei gepaarte Dehnmessstreifen aufweist.

Eine andere Ausbildung gegenüber einer festen Anbringung des Tasterschenkels an dem Tasterarm besteht darin, dass der Tasterschenkel als Wippe über eine Gelenkachse mit dem Tasterarm verbunden ist. Hierbei kann ein einfacher Aufbau in der Weise ausgebildet sein, dass zum Erfassen des Verschwenkens der Wippe mit dieser ein optisches Ablenkelement verbunden oder ein induktiver oder kapazitiver Geber vorgesehen ist.

Ein einfach aufgebauter, unter den gegebenen Bedingungen leicht anbringbarer optischer Messaufnehmer ergibt sich dadurch, dass das optische Ablen kelement Teil einer optischen Anordnung ist, die weiterhin eine an dem Tasterarm angebrachte Lichtquelle zum Abgeben eines auf das optische Ablenkelement geführten Lichtstrahls, eine Strahlleitvorrichtung sowie einen den von dem optischen Ablenkelement reflektierten Strahl aufnehmenden positionsempfindlichen optischen Wandler aufweist. Dabei werden die Anbringung und die Justieru ng sowie die Messung in einem schmalen Kanal dadurch begünstigt, dass die Lichtquelle und der optische Wandler sowie eine diesem vorgeschaltete optische Einheit an einem der Axialführung zugekehrten Abschnitt des Tasterarmes angeordnet sind.

Die Justierung der Messtastereinrichtung und die Handhabung bei der Messung werden dadurch wesentlich vereinfacht, dass die Axialführung mittels eines an eine Einführöffnung eines abzutastenden Bauteils angepassten Adapters an dem Bauteil anschließbar ist. Mit diesen Maßnahmen erübrigt sich auch ein aufwendiger Messtisch mit Einspann- und Justiervorrichtungen, da die Messtastereinrichtung mittels des Adapters dem Bauteil eindeutig zugeordnet ist und die Messstelle bei verschiedenen Bauteilen eines gleichen Typs stets eindeutig festliegt und ohne Schwierigkeiten angefahren werden kann, ohne dass die Lage des Messkopfes visuell kontrolliert werden muss und insbesondere durch eine einfache Programmierung auch automatisch angefahren werden kann. Dabei wird auch die Gefahr einer Zerstörung des Messkopfes durch unbeabsichtigtes Anstoßen an eine innere Wand des Bauteils wesentlich verringert.

Eine weitere vorteilhafte Maßnahme zum einfachen Anfahren unterschiedlicher Messstellen innerhalb des Bauteils besteht darin, dass der Tasterarm um seine Achse automatisch und reproduzierbar mit einer Steuereinrichtung der Axialführung drehbar ist.

Die Erfindung wird nachfolgend anhand von Ausführungsbeispielen unter Bezugnahme auf die Zeichnungen näher erläutert. Es zeigen:
- Fig. 1A und 1B: ein erstes Ausführungsbeispiel einer Messtastereinrichtung im Längsschnitt bei zwei unterschiedlichen Stellungen eines Messkopfes und
- Fig. 2A bis 2C: ein weiteres Ausführungsbeispiel der Messtastereinric htung in unterschiedlichen Lagen bezüglich eines Bauteils bzw. in unterschiedlichen Stellungen des Tasterkopfes.

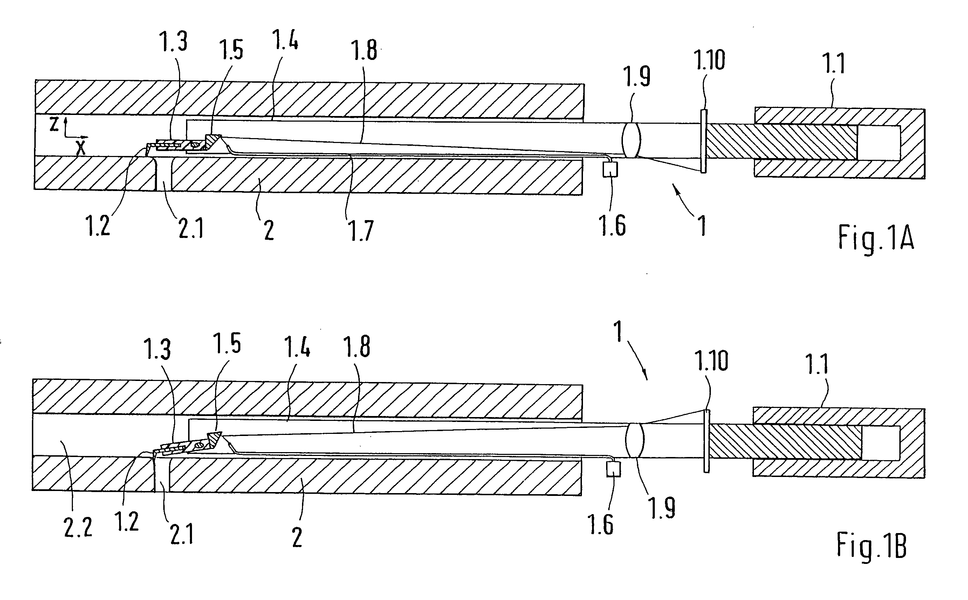

Wie aus Fig. 1A ersichtlich, ist eine Messtastereinrichtung 1 mit einem Tasterarm 1.4, an dessen vorderem Ende ein Tasterschenkel 1.3 mit einem spitzen oder gerundeten Tasterkopf 1.2 angebracht ist, in eine enge Bohrung eines metallischen Bauteils, beispielsweise eines Verteilerrohres, bis in die Nähe einer in den Hohlraum 2.2 des engen Kanals mündenden Querbohrung 2.1 eingeführt, um dort mittels des Tasterkopfes 1.2 einen Übergangsradius abzutasten. Dazu wird der an sich starre Tasterarm 1.4 in axialer Richtung des Hohlraumes 2.2 mittels einer Axialführung 1.1 bewegt, wobei der Tasterkopf 1.2 in z-Richtung entsprechend dem Verlauf des Übergangsradius ausgelenkt wird. Die Verschiebung des Tasterarmes 1.4 und damit auch des Tasterkopfes 1.2 in axialer Richtung, d.h. in x-Richtung wird mittels eines in der Axialführung 1.1 vorgesehenen (nicht gezeigten) Wegaufnehmers erfasst und der Auslenkung des Tasterkopfes 1.2 in z-Richtung mittels einer Auswerteeinrichtung zugeordnet. Gegenüber der Fig. 1A ist in der Fig. 1B der Tasterkopf entlang des Übergangsradius in z-Richtung leicht nach unten ausgelenkt. Die Auslenkung in z-Richtung beträgt dabei z.B. einige 10 oder 100µm. Es können aber auch Oberflächenrauhigkeiten in der Größenordnung unter 10 µm erfasst werden.

Der Tasterschenkel 1.3 ist am vorderen Ende des Tasterarmes 1.4 beispielhaft an einer Gelenkachse gelagert und starr mit einem optischen Ablenkelement 1.5 versehen. An dem der Axialführung 1.1 zugekehrten Endabschnitt des Tasterarmes 1.4 ist eine Lichtquelle 1.6, beispielsweise eine Laserdiode, angeordnet, deren Lichtstrahl über einen Strahlleiter 1.7 in Form einer optischen Faser zu dem optischen Ablenkelement 1.7 geführt und dort entsprechend dem Kippwinkel des Tasterschenkels 1.3 infolge einer z-Auslenkung als reflektierter Strahl 1.8 abgelenkt und über eine optische Einheit 1.9 einem positionsempfindlichen optischen Wandler, z.B. einer CCD-Zeile zugeführt, mit der ein elektrisches Signal der z-Auslenkung erhalten wird. Dabei liegen auch der optische Wandler 1.10 sowie die vorgeschaltete optische Einheit 1.9 in dem der Axialführung 1.1 zugekehrten Endabschnitt des Tasterarms 1.4.

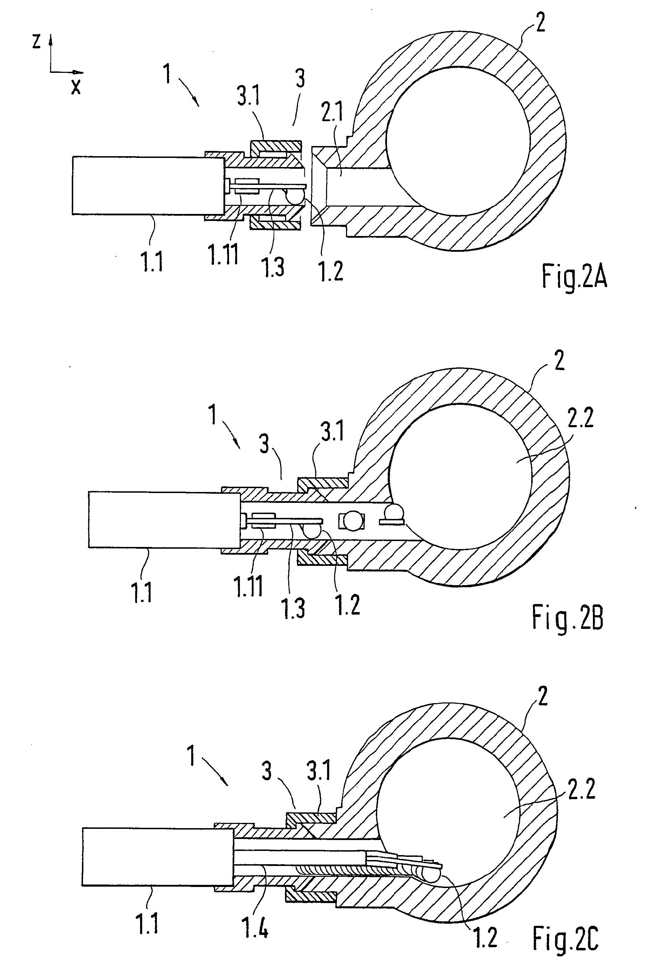

Die in den Fig. 1A und 1B gezeigte Gelenklagerung des Tasterschenkels 1.3 an dem Tasterarm 1.4 ist eine Schwenklagerung an einer Schwenkachse, wobei ein geringes Spiel nicht vollkommen auszuschließen ist und die Abtastung in z-Richtung von daher auf minimal 1 µm beschränkt ist. Prinzipiell sind noch feinere Auflösungen in z-Richtung möglich durch feste Anbindung des Tasters chenkels 1.3 an den Tasterarm 1.4 und biegeelastische Ausbildung des Tasters chenkels 1.3, so dass ein Festgelenk, d.h. ein Gelenk durch das Material selbst gebildet wird. Die z-Auslenkung des Tasterschenkels 1.3 bzw. damit des Tasterkopfes 1.2 kann auch mit anderen Messaufnehmern aufgenommen werden, beispielsweise induktiv oder kapazitiv, wobei derartige Messaufnehmer auch bei einer Schwenklagerung geeignet sind. Bei dem Tasterschenkel 1.3 mit Festgelenk sind auch piezoelektrische Elemente oder Dehnmessstreifen DMS 1.11 besonders geeignet. Ein derartiger Aufbau ist in den Fig. 2A bis 2C gezeigt.

In Fig. 2A sind das Bauteil 2 und die Messtastereinrichtung 1 in getrenntem Zustand dargestellt, wobei auf die Axialführung 1.1 ein Adapter 3 mit einem Innenteil und einer Überwurfmutter 3.1 aufgesetzt ist, um eine eindeutige Festlegung der Messtastereinrichtung 1 an dem Bauteil 2 zu erzielen. In den Fig. 2B und 2C ist der an dem Bauteil 2 angekoppelte Zustand der Messtastereinrichtung 1 dargestellt. Die Überwurfmutter 3.1 ist dabei auf ein Gewindestück einer mit einem Anschlussstutzen versehenen Querbohrung aufgeschraubt, so dass die Messtastereinrichtung 1 bezüglich der Abtaststelle im Übergangsbereich zwischen der Querbohrung 2.1 und dem Hohlraum 2.2 eindeutig positioniert ist. In einer Steuereinrichtung der Messtastereinrichtung 1 kann die abzutastende Stelle hinsichtlich ihrer Position durch entsprechende Einstellung, insbesondere Programmierung, eingegeben werden, so dass diese Stelle ohne visuelle Kontrolle automatisch angefahren werden kann und eine Beschädigung des Messkopfes beispielsweise durch Anstoßen an die der Messstelle gegenüberliegende Wand des Hohlraumes 2.2 vermieden wird. Ohne aufwendigen Messtisch ist somit eine einfache, eindeutige Justierung der Messtastereinrichtung 1 an dem Bauteil 2 gewährleistet. Eine derartige Ankopplung ist insbesondere bei der Serienfertigung gleicher Bauteile von erheblichem Vorteil.

Wie die Fig. 2B und 2C weiter zeigen, kann der hierbei gerundete Tasterkopf 1.2 mit dem Taster-arm 1.4 mittels der Steuereinrichtung automatisch und reproduzierbar auch in unterschiedliche axiale Drehstellungen gebracht werden, um z.B. den Übergangsradius zwischen der Querbohrung 2.1 und dem Hohlraum 2.2 umlaufend in verschiedenen Winkelstellungen zu messen.

Bei dem Ausführungsbeispiel nach den Fig. 2A bis 2C ist an dem biegeelastischen Tasterschenkel 1.3 ein Paar von den Messstreifen 1.11 angebracht, die die Auslenkung des Tasterschenkels 1.3 in z-Richtung in ein elektrisches Signal umwandeln, das der Steuereinrichtung zur Auswertung zugeführt wird. Das Dehnmessstreifenpaar 1.11 ergibt gegenüber einem einzelnen Dehnmessstreifen 1.11 zusätzlich eine Störungskompensation, beispielsweise von Temperatureinflüssen. In Fig. 2C ist ein Abtastweg des gerundeten Tasterkopfes 1.2 in x-Richtung angedeutet.

Mit den beschriebenen Maßnahmen ergibt sich ein einfach zu handhabender, kompakter Aufbau der Messtastereinrichtung 1.

## Patentansprüche

1. Messtastereinrichtung (1) mit einem in einer Axialführung (1.1) gelagerten und in x-Richtung unter Messung des Weges vor und zurück verfahrbaren Tasterarm (1.4) und einem an dessen freiem Endbereich angebrachten Tasterkopf (1.2), der während einer Messung sich mit einer Bauteiloberfläche in Berührung befindet und während des Verfahrens in x-Richtung durch die Oberflächenkonturen in einer zur x-Richtung senkrechten z-Richtung ausgelenkt wird, und mit einer Auswerteeinrichtung, mit der die Auslenkungen in z-Richtung in Abhängigkeit von dem Weg in x-Richtung erfassbar und auswertbar sind,
**dadurch gekennzeichnet,**
**dass** der an sich starre Tasterarm (1.4) in seinem vorderen Abschnitt mit einem Tasterschenkel (1.3) versehen ist, der eine gelenkige Anbindung des Tasterkopfes (1.2) an den Tasterarm (1.4) bildet, wobei an dem Tasterschenkel (1.3) ein die Auslenkung in z-Richtung aufnehmendes Messelement (1.5, 1.11) angeordnet ist.

2. Messtastereinrichtung nach Anspruch 1,
**dadurch gekennzeichnet,**
**dass** der Tasterschenkel (1.3) fest an dem Tasterarm (1.4) angebracht und biegeelastisch ausgebildet ist.

3. Messtastereinrichtung nach Anspruch 2,
**dadurch gekennzeichnet,**
**dass** das Messelement eine Dehnmessstreifeneinheit (1.11), ein optisches Ablenkelement (1.5) oder ein piezoelektrischer, induktiver oder kapazitiver Geber ist.

4. Messtastereinrichtung nach Anspruch 3,
**dadurch gekennzeichnet,**
**dass** die Dehnmessstreifeneinheit (1.11) zwei gepaarte Dehnmessstreifen aufweist.

5. Messtastereinrichtung nach Anspruch 1,
**dadurch gekennzeichnet,**
**dass** der Tasterschenkel (1.3) als Wippe über eine Gelenkachse mit dem Tasterarm (1.4) verbunden ist.

6. Messtastereinrichtung nach Anspruch 5,
**dadurch gekennzeichnet,**
**dass** zum Erfassen des Verschwenkens der Wippe mit dieser ein optisches Ablenkelement (1.5) verbunden oder ein induktiver oder kapazitiver Geber vorgesehen ist.

7. Messtastereinrichtung nach Anspruch 3 oder 5,
**dadurch gekennzeichnet,**
**dass** das optische Ablenkelement (1.5) Teil einer optischen Anordnung ist, die weiterhin eine an dem Tasterarm (1.4) angebrachte Lichtquelle (1.6) zum Abgeben eines auf das optische Ablenkelement (1.5) geführten Lichtstrahls, eine Strahlleitvorrichtung (1.7) sowie einen den von dem optischen Ablenkelement (1.5) reflektierten Strahl (1.8) aufnehmenden positionsempfindlichen optischen Wandler (1.10) aufweist.

8. Messtastereinrichtung nach Anspruch 7,
**dadurch gekennzeichnet,**
**dass** die Lichtquelle (1.6) und der optische Wandler (1.10) sowie eine diesem vorgeschaltete optische Einheit (1.9) an einem der Axialführung zugekehrten Abschnitt des Tasterarmes (1.4) angeordnet sind.

9. Messtastereinrichtung nach einem der vorhergehenden Ansprüche,
**dadurch gekennzeichnet,**
**dass** die Axialführung (1.1) mittels eines an eine Einführöffnung eines abzutastenden Bauteils (2) angepassten Adapters (3) an dem Bauteil (2) anschließbar ist.

10. Messtastereinrichtung nach einem der vorhergehenden Ansprüche,
**dadurch gekennzeichnet,**
**dass** der Tasterarm (1.4) um seine Achse automatisch und reproduzierbar mit einer Steuereinrichtung der Axialführung (1.1) drehbar ist.
